# EUROPÄISCHE PATENTSCHRIFT

(11) **EP 3 267 080 B1**
(45) Veröffentlichungstag und Bekanntmachung des Hinweises auf die Patenterteilung: **13.03.2019**
(21) Anmeldenummer: 17177568.7
(22) Anmeldetag: 23.06.2017
(51) Int. Cl.: F16K 1/12, F16K 27/02, F16K 31/06

(54) **AXIAL DURCHSTRÖMBARES FLUIDVENTIL**
FLUID VALVE WITH AXIAL FLOW
SOUPAPE DE FLUIDE À ÉCOULEMENT AXIAL

(30) Priorität: 06.07.2016 DE 102016112406
(43) Veröffentlichungstag der Anmeldung: 10.01.2018
(73) Patentinhaber: Pierburg GmbH, 41460 Neuss (DE)
(72) Erfinder: Sadiku, Besart, 50739 Köln (DE); Jasper, Jessica, 47799 Krefeld (DE); Wagner, Juri, 52445 Titz (DE); Wanzek, Tim, 45134 Essen (DE)
(74) Vertreter: Patentanwälte ter Smitten Eberlein-Van Hoof Rütten Partnerschaftsgesellschaft mbB

(56) Entgegenhaltungen:
- EP-A2- 1 235 012
- WO-A2-2010/088108
- AU-A- 3 430 371
- DE-A1- 1 523 434
- DE-A1- 19 837 694
- DE-C- 406 168
- GB-A- 430 164
- JP-A- 2004 239 283

## Beschreibung

Die Erfindung betrifft ein axial durchströmbares Fluidventil, insbesondere Kühlmittelabsperrventil mit einem Elektromagneten, der eine Spule, einen Kern und eine durchströmbare Ankereinheit sowie magnetische Rückschlusselemente aufweist, einem Gehäuse, in dem der Elektromagnet angeordnet ist, einem ersten Anschlussstutzen, der an einem ersten axialen Ende des Gehäuses befestigt ist und in dem ein Umströmungskörper angeordnet ist, der einen Ventilsitz aufweist, einem zweiten Anschlussstutzen, der an einem entgegengesetzten axialen Ende des Gehäuses befestigt ist und einer Schließfläche an einem axialen Endabschnitt der Ankereinheit, welche mit dem Ventilsitz zusammenwirkt.

Derartige Fluidventile werden auch als Koaxialventile, Hydraulikventile oder Kühlwasserabsperrventile bezeichnet. Diese Fluidventile dienen beispielswiese zur Abschaltung oder Freigabe eines Kühlmittelweges in einem Kraftfahrzeug, um einerseits eine möglichst schnelle Aufheizung der durchströmbaren Aggregate sicherzustellen und andererseits deren Überhitzung zu verhindern. Um eine solche Applikation möglichst kostengünstig ausführen zu können, muss einerseits eine möglichst druckverlustarme Durchströmung des Fluidventils sichergestellt werden, um die aufzubringende Pumpleistung möglichst gering zu halten und andererseits der Stromverbrauch des Fluidventils, welches üblicherweise elektromagnetisch betätigt wird, möglichst gering gehalten werden, um keine zusätzliche Energie zu verbrauchen. Aus diesen Gründen werden Koaxialventile verwendet, welche trotz eines kleinen benötigten Bauraums und geringer Herstellkosten aufgrund reduzierter Strömungsumlenkungen einen geringen Druckverlust erzeugen und gleichzeitig einen ausreichend großen Durchströmungsquerschnitt zur Verfügung stellen. Durch die geringen Baugrößen und daraus folgend kleinen und leichten beweglichen Teilen ist auch der Stromverbrauch dieser Fluidventile relativ gering. Um jedoch den vorhandenen Strömungsquerschnitt nutzen zu können, um einen ausreichenden Durchfluss sicherzustellen, ist es wichtig, den Druckverlust zu minimieren, der insbesondere aufgrund der notwendigen Strömungsumlenkungen am Umströmungskörper entsteht.

Ein derartiges Koaxialventil mit einem Umströmungskörper, der stromabwärts des Elektromagneten angeordnet ist, ist beispielswiese aus der EP 1 255 066 A2 bekannt. Dieses Ventil weist ein als Schließkörper dienendes Rohr auf, welches radial innerhalb eines Ankers des Elektromagneten befestigt ist und sich durch den Kern zum entgegengesetzten axialen Ende des Elektromagneten erstreckt. Ankerseitig ist am Gehäuse des Elektromagneten ein Auslassanschlussstutzen befestigt, in dem der den Ventilsitz aufweisende Umströmungskörper angeordnet ist, auf den das Rohr zum Verschluss des Strömungsquerschnitts aufsetzbar ist. Der Umströmungskörper weist einen festen Körperteil auf, über den der Umströmungskörper am Gehäuse befestigt ist und einen den Ventilsitz bildenden zweiten Körper auf, der aus einer zweiten Komponente gebildet ist und auf dem festen Körper mittels einer Schraube befestigt ist. Dieser Umströmungskörper erzeugt jedoch aufgrund seiner großen senkrecht zur Strömungsrichtung ausgerichteten Flächen und vorhandenen Kanten einen hohen Druckverlust.

Ein ähnliches Koaxialventil ist auch aus der DE 198 37 694 A1 bekannt. Der Umströmungskörper ist jedoch als Ringkörper mit geraden Seitenwänden ausgebildet. Zentral am Umströmungskörper ist zur Ausbildung des Ventilsitzes eine zusätzliche Dichtung angebracht, die als Ventilsitz dient. Aufgrund der senkrecht angeströmten Flächen entsteht auch hier ein großer Druckverlust.

So wird in der EP 0 317 823 A2 ein Umströmungskörper eines Koaxialventils offenbart, welcher eine Tropfenform aufweist. Dieses Ventil erzeugt zwar einen geringeren Druckverlust, benötigt jedoch einen sehr großen axialen Bauraum.

Ein ähnlicher Umströmungskörper eines Koaxialventils ist auch aus der JP 2004-239283 A bekannt. Auch dieser Umströmungskörper ist mehrteilig ausgebildet.

Auch aus der DE 951 691 C ist ein Fluidventil mit einem Umströmungskörper bekannt, an dem ein Ventilsitz ausgebildet ist, der mit einem axial beweglichen und durchströmbaren Verschlussrohr zusammenwirkt. Der Umströmungskörper ist zweistückig ausgebildet, wobei der den Ventilsitz aufweisende Teil axial zum feststehenden ersten Teil verschiebbar angeordnet ist. Das verschiebbare Teil ist aus zwei verschiedenen Komponenten gefertigt, wobei im Bereich des Ventilsitzes ein vom übrigen Körper unterschiedliches Material benutzt wird und weist eine konkave Anströmfläche mit etwa konstantem Radius auf. Die Abströmfläche ist kegelförmig zulaufend ausgebildet.

Entsprechend sind zwar Koaxialventile mit verbesserten Strömungsverhältnissen am Umströmungskörper bekannt, jedoch weisen diese zumeist einen komplexen Aufbau auf und benötigen einen relativ großen Bauraum.

Es stellt sich daher die Aufgabe, ein axial durchströmbares Fluidventil bereit zu stellen, bei dem der Umströmungskörper einen möglichst geringen Druckverlust erzeugt und gleichzeitig kompakt und einfach aufgebaut ist.

Diese Aufgabe wird durch ein axial durchströmbares Fluidventil mit den Merkmalen des Hauptanspruchs 1 gelöst.

Dadurch, dass der Umströmungskörper einen achssymmetrischen Umströmungsbereich mit einer Anströmfläche und einer Abströmfläche aufweist, die gemeinsam mindestens drei axial hintereinander angeordnete Oberflächenabschnitte aufweisen, deren Krümmung von einem Oberflächenabschnitt zum axial benachbarten Oberflächenabschnitt zwischen konkav und konvex wechselt, wobei der Umströmungskörper einstückig aus einem Elastomer oder als 2-Komponenten-Spritzgussteil hergestellt und einen äußeren Umfangsring aufweist, der über Stege mit dem Umströmungsbereich des Umströmungskörpers verbunden ist, wird ein Umströmungskörper geschaffen, der bei sehr geringen Druckverlusten eine sehr geringe axiale Baulänge aufweisen kann. Entsprechend sinkt der Bauraumbedarf des Fluidventils. Unter Anströmfläche ist dabei die Fläche zu verstehen, die angeströmt und umströmt wird. Die Abströmfläche befindet sich auf der stromabwärtigen Seite des Umströmungsbereiches im radial inneren Bereich des Ventilsitzes. Dadurch, dass der Umströmungskörper und der Ventilsitz einstückig aus einem Elastomer hergestellt sind, entfallen zusätzliche Fertigungsschritte. Stattdessen kann der Umströmungskörper in nur einem Fertigungsschritt hergestellt werden. Entsprechend vereinfacht sich auch die Montage. Des Weiteren wird die Schließkraft verstärkt, da durch die Druckdifferenz zwischen dem Einlass und dem Auslass der elastische Umströmungskörper gegen die Schließfläche der Ankereinheit gedrückt wird. Zusätzlich wird die Dichtigkeit verbessert, da Koaxialfehler zwischen dem Ventilsitz und der Ankereinheit durch die Elastizität des Umströmungskörpers ausgeglichen werden können. Zusätzlich wird die Verarbeitbarkeit durch das thermoplastische Elastomer verbessert und die Montage durch die Befestigung über den Umfangsring vereinfacht. So kann der Umströmungskörper einfach über seinen Umfangsring im Ventil befestigt werden, während der eigentliche, die Strömung beeinflussende Umströmungsbereich lediglich über die Stege befestigt ist und sich somit im Strömungskanal geringfügig elastisch bewegen kann. Zwischen den Stegen liegen die freien Strömungsquerschnitte, durch die das Fluid bei geöffnetem Ventil von der Anströmseite des Umströmungskörpers zur Abströmseite strömen kann.

Vorzugsweise ist die Anströmfläche durch einen ersten zentralen Oberflächenabschnitt gebildet, der konvex gekrümmt ist, und an den sich ein konkaver Oberflächenabschnitt anschließt, an den sich ein radial äußerer konvexer Oberflächenabschnitt anschließt, der den größten Abstand des Umströmungsbereiches zur Mittelachse aufweist. Mit einem derartig geformten Umströmungsbereich wurden minimierte Strömungswiderstände erzielt. Auch kann eine derartige Bauform in einem kleinen axialen Bauraum verwirklicht werden.

Besonders vorteilhaft ist es, wenn die Abströmfläche einen ersten zentralen Oberflächenabschnitt gebildet ist, der konvex gekrümmt ist, und an den sich ein konkav gekrümmter Oberflächenabschnitt anschließt. Gerade die Form der Abströmfläche hat einen großen Einfluss auf die Strömungscharakteristik. Es ergeben sich bei einer derartig ausgestalteten Abströmfläche geringe Druckverluste.

In einer weiterführenden bevorzugten Ausbildung ist eine Ventilsitzfläche des Ventilsitzes zwischen dem konkaven Oberflächenabschnitt der Abströmfläche und dem radial äußeren konvexen Oberflächenabschnitt der Anströmfläche oder am konkaven Oberflächenabschnitt der Abströmfläche ausgebildet. Entsprechend strömt das Fluid über den konkaven Abschnitt der Abströmfläche in die Ankereinheit ein. Dies führt zu einer allmählichen druckverlustarmen Umlenkung im Bereich des geringsten Querschnitts, so dass die axiale Durchströmung der Ankereinheit mit geringer Wirbelbildung und somit geringem Druckverlust hergestellt wird.

Um einen möglichst guten und sicheren Verschluss des Fluidventils zu erzielen, ist es vorteilhaft, eine Ventilsitzfläche des Ventilsitzes senkrecht zur Bewegungsrichtung der Ankereinheit anzuordnen.

In einer bevorzugten Ausbildung der Erfindung ist das Verhältnis der Länge des Umströmungsbereiches zur Breite des Umströmungsbereiches kleiner 1,5, besonders bevorzugt kleiner 1. So wird ein im Vergleich zu bekannten Ausführungen sehr geringer axialer Bauraum benötigt. Aufgrund der Formgebung findet dennoch keine Erhöhung des Strömungswiderstandes statt.

Weiterhin ist es bevorzugt, wenn der Durchmesser des Umströmungsbereiches dem 1,2 bis 1,5-fachen des Durchmessers der Schließfläche der Ankereinheit auf dem Ventilsitz entspricht. So kann eine Strömungsumlenkung ins Innere der Ankereinheit bereits vor dem engsten Querschnitt zwischen dem Ventilsitz und der Schließfläche der Ankereinheit stattfinden, wodurch ebenfalls der Druckverlust gesenkt wird.

Vorzugsweise entspricht die maximale axiale Länge der Abströmfläche dem 0,1 bis 0,5-fachen des Durchmessers der Schließfläche der Ankereinheit auf dem Ventilsitz. Die Abströmfläche ist somit sehr kurz ausgeführt, ohne dass hierdurch Druckverluste folgen.

Auch ist es vorteilhaft, wenn die maximale axiale Länge der Anströmfläche dem 0,1 bis 1,1-fachen des Durchmessers der Schließfläche der Ankereinheit auf dem Ventilsitz entspricht. Hierdurch wird wiederum eine geringe axiale Baulänge erzielt, so dass der Umströmungskörper insgesamt klein und leicht ist.

Eine besonders einfache Befestigung des Umströmungskörpers wird dadurch erreicht, dass der Umfangsring des Umströmungskörpers axial in Richtung des Gehäuses über einen Absatz des ersten Anschlussstutzens verspannt ist. So kann auf zusätzliche Befestigungsmittel verzichtet werden. Durch das Verspannen des Umfangsrings dient dieser aufgrund seiner elastischen Eigenschaften auch zur Abdichtung des Umströmungskörpers nach außen.

Besonders vorteilhaft ist es, den Umfangsring des Umströmungskörpers unter Zwischenlage eines Stützrings zwischen dem Gehäuse und dem Absatz des ersten Anschlussstutzens einzuklemmen. Dieser Stützring kann wie der Umströmungskörper zum Einleiten des Fluids in die Ankereinheit unter geringem Druckverlust und Strömungswiderstand genutzt werden und somit in einem Montageschritt bei der Befestigung des Anschlussstutzens am Gehäuse befestigt werden.

Es wird somit ein axial durchströmbares Fluidventil, insbesondere Kühlmittelabsperrventil für eine Verbrennungskraftmaschine, geschaffen, welches bei optimierten Strömungsverhältnissen im Bereich des Umströmungskörpers und daraus folgend geringen Strömungswiderständen und Druckverlusten lediglich einen minimierten Bauraum benötigt. Insbesondere der Bauraum in axialer Richtung ist bei den vorhandenen Druckverlusten minimiert. Zusätzlich wird eine vereinfachte Herstellung und Montage bei dichtem Verschluss erreicht.

Zwei Ausführungsbeispiele erfindungsgemäßer axial durchströmbarer Fluidventile, sind in den Figuren dargestellt und werden im Folgenden anhand Ihrer Verwendung als Kühlwasserabsperrventil beschrieben.
Figur 1 zeigt eine Seitenansicht eines erfindungsgemäßen Fluidventils in stromlos offener Version in geschnittener Darstellung.
Figur 2 zeigt eine Seitenansicht eines erfindungsgemäßen Fluidventils in stromlos geschlossener Version in geschnittener Darstellung.

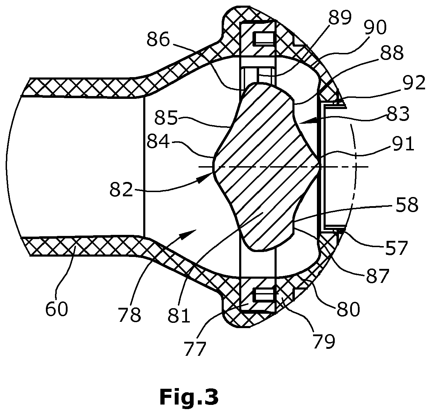

Figur 3 zeigt eine vergrößerte Ansicht eines Umströmungskörpers des Fluidventils aus Figur 1 und 2.

Das erfindungsgemäße, axial durchströmbare Fluidventil, welches für Kühlkreisläufe von Verbrennungsmotoren, Hybrid- oder Elektrofahrzeugen verwendet werden kann, weist einen Elektromagneten 10 auf, der in einem Gehäuse 12 angeordnet ist. Der Elektromagnet 10 besteht aus einer Spule 14, die auf einen Spulenträger 16 gewickelt ist, sowie Rückschlusselementen 18, 20, 22, welche durch zwei an den axialen Enden des Spulenträgers 16 angeordnete Rückschlussbleche 18, 20 sowie ein die Spule 14 umgebendes Joch 22 gebildet werden. Im Innern des Spulenträgers 16 beziehungsweise des Gehäuses 12 ist eine Hülse 24 befestigt, in deren Innern ein Kern 26 des Elektromagneten 10 befestigt ist und in der ein Anker 28 des Elektromagneten 10 gleitbeweglich angeordnet ist. Zur Bestromung der Spule 14 ist am Gehäuse 12 ein Stecker 30 ausgebildet, dessen elektrische Kontaktfahnen 32 sich durch das Gehäuse 12 zur Spule 14 erstrecken.

Der Kern 26 weist eine radial innere, zur Hülse 24 offene, umfängliche Ausnehmung 34 auf, welche sich vom Anker 28 aus betrachtet bis an eine Anlagefläche 36 erstreckt, gegen die eine Druckfeder 38 anliegt, welche unter Vorspannung an ihrem entgegengesetzten Ende gegen einen ringförmigen Vorsprung 40 des Ankers 28 anliegt und die Hülse 24 in diesem Bereich umgibt. Der radial innere ringförmige Vorsprung 40 am axialen Ende 41 des Ankers 28 ist korrespondierend zu einem sich von der Ausnehmung 34 des Kerns 26 im radial äußeren Bereich erstreckenden konischen Vorsprung 42 ausgebildet, wodurch der Anker 28 bei Bestromung der Spule 14 teilweise in den Kern 26 eintauchen kann. Um ein Anschlagen des Ankers 28 am Kern 26 und ein daraus folgendes Haften des Ankers 28 am Kern 26 zu verhindern, ist am Ende des Vorsprungs 40 des Ankers 28 eine umlaufende Umfangsnut 44 ausgebildet, in der ein nicht magnetisierbarer Anschlagring 46 angeordnet ist, gegen den der Kern 26 im bestromten Zustand anliegt.

Im radial inneren Bereich des ringförmigen Vorsprungs 40 des Ankers 28 ist dieser mit einem Rohr 48 verbunden, welches sich durch den Kern 26 erstreckt und mit dem Anker 28 eine bewegbare und durchströmbare Ankereinheit 49 bildet. Ein axiales Ende des Rohres 48, welches zum Anker 28 weist, ragt zur Befestigung am Anker 28 in eine entsprechende ringförmige Aufnahme 47, die am Innenumfang des Ankers 28 im Bereich des Vorsprungs 40 ausgebildet ist und in die das Ende des Rohres 48 beispielsweise eingepresst wird.

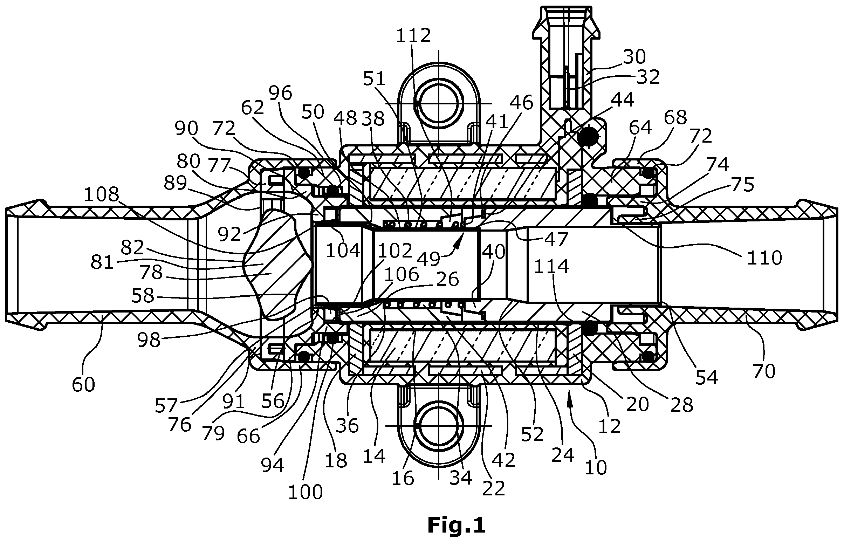

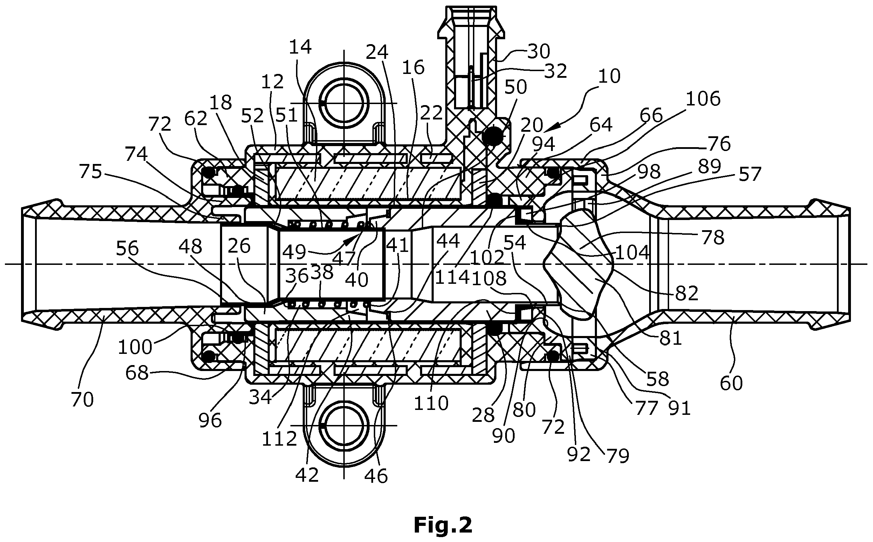

Die Ankereinheit 49 erstreckt sich vom als Einlassstutzen dienenden ersten Anschlussstutzen 60 aus betrachtet zunächst zylindrisch, woraufhin eine kegelabschnittsförmige Einschnürung 50 folgt, an die sich ein zylindrischer Abschnitt 51 verringerten Durchmessers anschließt, in dem auch der Übergang zwischen dem Rohr 48 und dem Anker 28 ausgebildet ist. Im weiteren Verlauf ist an der Ankereinheit 49 eine kegelabschnittsförmige, umfängliche Erweiterung 52 ausgebildet, von deren Ende aus sich die Ankereinheit 49 wieder mit dem Durchmesser zylindrisch fortsetzt, der auch im Eingangsbereich ausgebildet ist. Bei den in den Figuren 1 und 2 dargestellten Ausführungen ist die Bauform der Ankereinheit identisch, jedoch ist aufgrund der vertauschten Fließrichtung bei der Ausführung in Figur 1 die Einschnürung 50 im Rohr 48 und die Erweiterung 52 im Anker 28 ausgebildet, während bei der Ausführung gemäß der Figur 2 die Einschnürung 50 im Anker 28 und die Erweiterung 52 im Rohr 48 ausgebildet ist. Die Druckfeder 38 umgibt jeweils den zylindrischen Abschnitt 51 verringerten Durchmesser, der am Rohr 48 ausgebildet ist, so dass dieser als Führung der Druckfeder 38 dient.

Die voneinander weg weisenden Endabschnitte 54, 56 des Rohres 48 und des Ankers 28 weisen in den vorliegenden Ausführungsbeispielen gleiche Innendurchmesser auf, welche in einer ringförmigen dünnen Schließfläche 57 enden, die mit einem Ventilsitz 58 korrespondieren kann, welcher im Inneren des Anschlusstutzens 60 angeordnet ist und entweder gegenüberliegend zum Endabschnitt 54 des Ankers 28 oder gegenüberliegend zum Endabschnitt 56 des Rohres 48 angeordnet wird.

Das Gehäuse 12 des Fluidventils weist an seinen axialen Enden sich axial erstreckende ringförmige Vorsprünge 62, 64 auf, die jeweils von einem korrespondierenden ringförmigen Vorsprung 66, 68 des ersten Anschlussstutzens 60 sowie eines zweiten Anschlussstutzens 70, der als Auslassstutzen dient, unmittelbar unter Zwischenlage eines O-Rings 72 umgriffen werden. Auf diesen Vorsprüngen 62, 64 können entsprechend der erste Anschlussstutzen 60 und der zweite Anschlussstutzen 70 beispielsweise durch Laserschweißen befestigt werden.

Der zweite Anschlussstutzen 70 weist auch in seinem radial weiter innen liegenden Bereich einen sich axial erstreckenden ringförmigen Vorsprung 74 auf, der den Vorsprung 62 des Gehäuses 12 von innen umgreift und bei dem in Figur 1 dargestellten Fluidventil den axialen Endabschnitt 54 des Ankers 28 umgibt und radial innerhalb des Vorsprungs 64 angeordnet ist sowie beim in Figur 2 dargestellten Fluidventil den axialen Endabschnitt 56 des Rohres 48 unmittelbar umgibt und radial innerhalb des Vorsprungs 62 angeordnet ist.

Der erste Anschlussstutzen 60 weist einen Absatz 76 auf, über den ein äußerer Umfangsring 77 eines Umströmungskörpers 78 sowie ein äußerer Umfang 79 eines Stützrings 80 bei der Befestigung des Anschlussstutzens 60 gegen den ringförmigen Vorsprung 62 des Gehäuses 12 beim Ausführungsbeispiel gemäß Figur 1 und den Vorsprung 64 des Gehäuses 12 beim Ausführungsbeispiel gemäß Figur 2 geklemmt wird, so dass der Stützring 80 und der Umströmungskörper 78, an dem der Ventilsitz 58 ausgebildet ist, in ihrer Lage fixiert sind.

Der Umströmungskörper 78 weist im vorliegenden Ausführungsbeispiel einen Umströmungsbereich 81 auf, der achssymmetrisch zur Mittelachse des Fluidventils ausgebildet ist und eine Anströmfläche 82 aufweist, die sich von der stromaufwärtigen Seite bis zum Ventilsitz 58 erstreckt und eine Abströmfläche 83 auf, die im radial Inneren des Ventilsitzes 58 ausgebildet ist. Die Anströmfläche 82 weist drei axial hintereinander liegende Oberflächenabschnitte 84, 85, 86 auf. Der erste zentrale Oberflächenabschnitt 84 ist konvex geformt, so dass keine Wirbelbildung beim zentralen Anströmen entsteht. An diesen Oberflächenabschnitt 84 schließt sich radial ein konkaver Oberflächenabschnitt 85 an, über den die Strömung radial nach außen allmählich abgelenkt wird und der sich radial etwa so weit erstreckt, dass sein Außendurchmesser etwa dem Strömungsdurchmesser des ersten Anschlussstutzens 60 in seinem zylindrischen Abschnitt entspricht. Dieser konkave Oberflächenabschnitt 85 geht stetig in einen erneut konvexen, dritten Oberflächenabschnitt 86 der Anströmfläche 82 über, der den größten Außendurchmesser des Umströmungsbereiches 81 bildet und somit die Strömung allmählich derart umlenkt, dass eine radial nach außen gerichtete Strömungskomponente in eine nach radial innen gerichtete Strömungskomponente umgelenkt wird. Er wirkt zusammen mit einer konkaven Strömungsleitfläche 90 des Stützrings zusammen, so dass die Strömung zwischen der konkaven Strömungsleitfläche 90 und dem konvexen Oberflächenabschnitt 86 in Richtung der Ankereinheit 49 geleitet wird. Bei einem Einlassdurchmesser des ersten Anschlussstutzens 60 von etwa 16 mm und einem inneren Durchmesser der Ankereinheit 49 im Bereich der Schließfläche 57 von etwa 13 mm beträgt der größte Durchmesser des Umströmungsbereiches 81 beispielsweise etwa 17 mm, während die axiale Länge der Anströmfläche 82 lediglich etwa 5 mm beträgt.

An die Anströmfläche 82 schließt sich eine etwa senkrecht zur Mittelachse verlaufende Ventilsitzfläche 87, auf die die Schließfläche 57 der Ankereinheit 49 absenkbar ist. Nach radial innen schließt sich die Abströmfläche 83 an, die aus einem radial äußeren konkaver Oberflächenabschnitt 88 sowie einem radial inneren konvexen Oberflächenabschnitt 91 besteht. So wird im äußeren Oberflächenabschnitt 88 die radial nach innen gerichtete Strömungskomponente allmählich in eine axiale Strömungskomponente umgewandelt, durch die folgende konvexe Form des Oberflächenabschnitts 91 dieser Führungsabschnitt jedoch verkürzt, so dass eine geringere Reibung durch die entstehenden Grenzschichten vorliegt. Die gesamte axiale Länge der Abströmfläche 83 beträgt lediglich etwa 2,5 mm, so dass die Gesamtlänge des Umströmungsbereiches geringer ist als dessen Breite.

Vom äußeren konvexen Oberflächenabschnitt 86 der Anströmfläche 82 erstrecken sich nach radial außen vier Stege 89, über die der Umströmungsbereich 81 des Umströmungskörpers 78 am Umfangsring 77 befestigt ist und zwischen denen der Fluidstrom vom ersten Anschlussstutzen 60 in die Ankereinheit 49 gelangen kann.

Der Umströmungskörper 78 ist vollständig aus einem Elastomer, insbesondere aus Ethylen-Propylen-Dien-Kautschuk einstückig hergestellt und weist entsprechend elastische Eigenschaften auf, wodurch er sowohl axial geringfügig bewegbar ist als auch leichte Kippstellungen einnehmen kann. Alternativ kann der Umströmungskörper jedoch auch als 2-Komponenten-Spritzgussteil hergestellt werden.

Der Umströmungskörper 78 wirkt mit dem sich daran anschließenden Stützring 80 zusammen, welcher mit einer sich radial nach außen erstreckenden ringförmigen Erweiterung 79 zwischen dem Umfangsring 77 des Umströmungskörpers 78 und dem Vorsprung 62 des Gehäuses 12 eingeklemmt ist. An die Strömungsleitfläche 90, die sich konkav nach radial innen erstreckt, schließt sich ein radial innerer Bereich 92 an, der sich radial erstreckt und radial gegenüberliegend zum Endabschnitt 54 des Ankers 28 bei der Version gemäß Figur 2 beziehungsweise zum Endabschnitt 56 des Rohres 48 bei der Version gemäß Figur 1 endet. Im Übergangsbereich zwischen dem konkaven Teil und dem sich radial erstreckenden Bereich 92 der Strömungsleitfläche 90 erstreckt sich von der axial gegenüberliegenden Seite des Stützrings 80 ein ringförmiger Vorsprung 94 in axialer Richtung zum Elektromagneten 10.

Bei dem Ausführungsbeispiel gemäß der Figur 1 wird dieser ringförmige Vorsprung 94 von einer stufenförmigen Erweiterung 96 am Ende der Hülse 24 radial umgeben und liegt radial innen gegen ein Ende des Kerns 26 und einen axial gegen den Kern 26 anliegenden Dichtring 98, der als Lippendichtring ausgebildet ist, an. Im radial äußeren Bereich wird diese stufenförmige Erweiterung 96 der Hülse 24 von einer Dichtung 100 umgeben, die im radial äußeren Bereich gegen den Vorsprung 62 des Gehäuses 12 anliegt.

Der Lippendichtring 98 liegt mit seinem sich radial erstreckenden Lippenträger 102 gegen das axiale Ende des Kerns 26 an. Vom Lippenträger 102 aus erstrecken sich an den radialen Enden zwei Dichtlippen 104, 106, wovon die radial innere Dichtlippe 104 von radial außen gegen das Rohr 48 anliegt und die radial äußere Dichtlippe 106 gegen den Vorsprung 94 des Stützrings 80 anliegt. Die Lippenenden 108 sind gegenüberliegend zum radial inneren Bereich 92 des Stützrings 80 orientiert.

Bei der Ausführung gemäß Figur 2 werden die gleichen Bauteile verwendet, jedoch werden der Anschlussstutzen 60 mit dem Umströmungskörper 78 und dem Stützring 80 sowie dem Lippendichtring 98 am anderen Ende des Gehäuses 12 angeordnet. Entsprechend liegt der Lippendichtring 98 mit seinem Lippenträger 102 gegen eine ringförmige, sich radial erstreckende Einschnürung 110 der Hülse 24 an, welche den Verstellweg des Ankers 28 zum Anschlussstutzen 60 begrenzt. Die radial innere Dichtlippe 104 liegt entsprechend radial gegen das dünne Ende 54 des Ankers 28 an.

Dieser Aufbau führt bei beiden Ausführungsbeispielen dazu, dass ein Raum 112 zwischen dem axialen Ende 41 des Ankers 28 und dem Kern 26, in dem auch die Druckfeder 38 angeordnet ist, immer mit einem Fluid gefüllt ist, welches bei geschlossenem Ventil einen Druck aufweist, der dem Druck am zweiten Anschlussstutzen 70 entspricht, da durch den Lippendichtring 98 ein Einströmen des Fluids vom ersten Anschlussstutzen 60 entlang des Endabschnitts 54 des Ankers bei dem Ausführungsbeispiel gemäß Figur 2 oder entlang des axialen Endabschnitts 56 des Rohres 48 beim Ausführungsbeispiel gemäß der Figur 1 in diesen Raum 112 verhindert wird, da die Dichtlippen 104, 106 durch den an dieser Seite höheren Druck radial gegen die radial inneren und äußeren Bauteile gedrückt werden, gegen die sie anliegen. Das Fluid gelangt entsprechend lediglich vom zweiten Anschlussstutzen 70 entlang des Spaltes zwischen dem Rohr 48 und dem Kern 26 in Figur 2 beziehungsweise entlang des Spaltes zwischen der Hülse 24 und dem Anker 28 in den Raum 112, der entsprechend mit Fluid gefüllt ist, während durch die Dichtung 100 sowie eine Dichtung 114, welche sich ankerseitig zwischen der Hülse 24 und dem Vorsprung 64 des Gehäuses 12 befindet, ein Fluidstrom zum Elektromagneten 10 im Außenbereich der Hülse 24 zuverlässig verhindert wird.

Durch diesen Aufbau kann der erste Anschlussstutzen 60 inklusive des Umströmungskörpers 78 und des Stützringes 80 sowie des Lippendichtringes 98 mit dem zweiten Anschlussstutzen 70 getauscht werden, was zur Folge hat, dass dieses Fluidventil, ohne andere Bauteile verwenden zu müssen sowohl stromlos geschlossen als auch stromlos offen ausgeführt werden kann, wie dies in den Ausführungsbeispielen gemäß der Figuren 1 und 2 dargestellt ist.

Die besondere Ausformung des einstückigen Umströmungskörpers hat den Vorteil, dass bei sehr geringer axialer Baulänge ein hoher Volumenstrom bei minimiertem Druckverlust erreicht wird. Durch die wechselnden Vorzeichen der Krümmung bei ansonsten im Wesentlichen stetiger sprung- und kantenfreier Ausbildung des Umströmungsbereiches wird eine optimierte Strömungsführung mit geringem Strömungswiderstand erreicht. Entsprechend kann die Größe des Fluidventils verringert werden, da kleinere Querschnitte und Längen sowie geringere Magnetkräfte durch die druckverlustarme Strömungsführung notwendig sind.

Es sollte deutlich sein, dass der Schutzbereich des vorliegenden Hauptanspruchs nicht auf die beschriebenen Ausführungsbeispiele beschränkt ist, sondern verschiedene Modifikationen möglich sind. Beispielsweise kann, ohne dass sich hierdurch der Druckverlust beträchtlich erhöhen würde, die im Ausführungsbeispiel beschriebene Durchströmungsrichtung auch gewechselt werden, so dass die Anströmfläche als Abströmfläche und umgekehrt dienen würde. Je nach Auslegung des verwendeten Elastomers des Umströmungskörpers können gegebenenfalls Stützen verwendet werden, um eine zu starke Verschiebung des Umströmungskörpers durch Strömungskräfte zu verhindern. Auch ist die Erfindung nicht auf die in der Beschreibung genannten Maße des Umströmungsbereiches beschränkt, sondern diese sind lediglich beispielhaft als zur Erfindung gehörend aufgeführt.

## Patentansprüche

1. Axial durchströmbares Fluidventil, insbesondere Kühlmittelabsperrventil mit
einem Elektromagneten (10), der eine Spule (14), einen Kern (26) und eine durchströmbare Ankereinheit (49) sowie magnetische Rückschlusselemente (18, 20, 22) aufweist,
einem Gehäuse (12), in dem der Elektromagnet (10) angeordnet ist, einem ersten Anschlussstutzen (60), der an einem ersten axialen Ende des Gehäuses (12) befestigt ist und in dem ein Umströmungskörper (78) angeordnet ist, der einen Ventilsitz (58) aufweist,
einem zweiten Anschlussstutzen (70), der an einem entgegengesetzten axialen Ende des Gehäuses (12) befestigt ist und einer Schließfläche (57) an einem axialen Endabschnitt (54, 56) der Ankereinheit (49), welche mit dem Ventilsitz (58) zusammenwirkt, **dadurch gekennzeichnet, dass**
der Umströmungskörper (78) einen achssymmetrischen Umströmungsbereich (81) mit einer Anströmfläche (82) und einer Abströmfläche (83) aufweist, die gemeinsam mindestens drei axial hintereinander angeordnete Oberflächenabschnitte (84, 85, 86, 88, 91) aufweisen, deren Krümmung von einem Oberflächenabschnitt (84, 85, 86, 88, 91) zum axial benachbarten Oberflächenabschnitt (84, 85, 86, 88, 91) zwischen konkav und konvex wechselt, wobei der Umströmungskörper (78) einstückig aus einem Elastomer oder als 2-Komponenten-Spritzgussteil hergestellt ist und einen äußeren Umfangsring (77) aufweist, der über Stege (89) mit dem Umströmungsbereich (81) des Umströmungskörpers (78) verbunden ist.

2. Axial durchströmbares Fluidventil, insbesondere Kühlmittelabsperrventil nach Anspruch 1,
**dadurch gekennzeichnet, dass**
die Anströmfläche (82) durch einen ersten zentralen Oberflächenabschnitt (84) gebildet ist, der konvex gekrümmt ist, und an den sich ein konkaver Oberflächenabschnitt (85) anschließt, an den sich ein radial äußerer konvexer Oberflächenabschnitt (86) anschließt, der den größten Abstand des Umströmungsbereiches (81) zur Mittelachse aufweist.

3. Axial durchströmbares Fluidventil, insbesondere Kühlmittelabsperrventil nach Anspruch 2,
**dadurch gekennzeichnet, dass**
die Abströmfläche (83) einen ersten zentralen Oberflächenabschnitt (91) bildet, der konvex gekrümmt ist, und an den sich ein konkav gekrümmter Oberflächenabschnitt (88) anschließt.

4. Axial durchströmbares Fluidventil, insbesondere Kühlmittelabsperrventil nach einem der vorhergehenden Ansprüche, **dadurch gekennzeichnet, dass**
eine Ventilsitzfläche (87) des Ventilsitzes (58) zwischen dem konkav gekrümmten Oberflächenabschnitt (88) der Anströmfläche (82) oder der Abströmfläche (83) und dem radial äußeren konvexen Oberflächenabschnitt (86) der Anströmfläche (82) oder am konkaven Oberflächenabschnitt (88) der Anströmfläche (82) oder der Abströmfläche (83) ausgebildet ist.

5. Axial durchströmbares Fluidventil, insbesondere Kühlmittelabsperrventil nach Anspruch 4,
**dadurch gekennzeichnet, dass**
die Ventilsitzfläche (87) des Ventilsitzes (58) senkrecht zur Bewegungsrichtung der Ankereinheit (49) angeordnet ist.

6. Axial durchströmbares Fluidventil, insbesondere Kühlmittelabsperrventil nach einem der vorhergehenden Ansprüche, **dadurch gekennzeichnet, dass**
das Verhältnis der Länge des Umströmungsbereiches (81) zur Breite des Umströmungsbereiches (81) kleiner 1,5 ist.

7. Axial durchströmbares Fluidventil, insbesondere Kühlmittelabsperrventil nach Anspruch 6,
**dadurch gekennzeichnet, dass**
das Verhältnis der Länge des Umströmungsbereiches (81) zur Breite des Umströmungsbereiches (81) kleiner 1 ist.

8. Axial durchströmbares Fluidventil, insbesondere Kühlmittelabsperrventil nach einem der vorhergehenden Ansprüche, **dadurch gekennzeichnet, dass**
der Durchmesser des Umströmungsbereiches (81) dem 1,2 bis 1,5-fachen des Durchmessers der Schließfläche (57) der Ankereinheit (49) auf dem Ventilsitz (58) entspricht.

9. Axial durchströmbares Fluidventil, insbesondere Kühlmittelabsperrventil nach einem der vorhergehenden Ansprüche, **dadurch gekennzeichnet, dass**
die maximale axiale Länge der Abströmfläche (83) dem 0,1 bis 0,5-fachen des Durchmessers der Schließfläche (57) der Ankereinheit (49) auf dem Ventilsitz (58) entspricht.

10. Axial durchströmbares Fluidventil, insbesondere Kühlmittelabsperrventil nach einem der vorhergehenden Ansprüche, **dadurch gekennzeichnet, dass**
die maximale axiale Länge der Anströmfläche (82) dem 0,1 bis 1,1-fachen des Durchmessers der Schließfläche (57) der Ankereinheit (49) auf dem Ventilsitz (58) entspricht.

11. Axial durchströmbares Fluidventil, insbesondere Kühlmittelabsperrventil nach einem der vorhergehenden Ansprüche, **dadurch gekennzeichnet, dass**
der Umfangsring (77) des Umströmungskörpers (78) axial in Richtung des Gehäuses (12) über einen Absatz (76) des ersten Anschlussstutzens (60) verspannt ist.

12. Axial durchströmbares Fluidventil, insbesondere Kühlmittelabsperrventil nach einem der vorhergehenden Ansprüche, **dadurch gekennzeichnet, dass**
der Umfangsring (77) des Umströmungskörpers (78) unter Zwischenlage eines Stützrings (80) zwischen dem Gehäuse (12) und dem Absatz (76) des ersten Anschlussstutzens (60) eingeklemmt ist.

## Claims

1. Fluid valve with axial flow, in particular a coolant shut-off valve with a solenoid (10) comprising a coil (14), a core (26) and a flow-through armature unit (49), as well as magnetic reflux elements (18, 20, 22),
a housing (12) in which the solenoid (10) is arranged,
a first connection piece (60) fastened to a first axial end of the housing (12) and in which a flow-around body (78) is arranged which comprises a valve seat (58),
a second connection piece (70) mounted at an opposite axial end of the housing (12), and
a closing surface (57) at an axial end portion (54, 56) of the armature unit (49), which cooperates with the valve seat (58),
**characterized in that**
the flow-around body (78) has an axially symmetric flow-around region (81) with a first incident flow surface (82) and an outflow surface (83) which together comprise at least three surface sections (84, 85, 86, 88, 91) arranged one behind the other in the axial direction, the curvature of which changes between concave and convex from one surface section (84, 85, 86, 88, 91) to the axially adjacent surface section (84, 85, 86, 88, 91), the flow-around body (78) being made as a single piece from an elastomer or as a two-component injection molded part and comprising an outer circumferential ring (77) connected with the flow-around region (81) of the flow-around body (78) via webs (89).

2. Fluid valve with axial flow, in particular a coolant shut-off valve of claim 1, **characterized in that** the incident flow surface (82) is formed by a convexly curved first central surface section (84) adjoined by a concave surface section (85) which is adjoined by a radially outer convex surface section (86) having the greatest distance of the flow-around region (81) to center axis.

3. Fluid valve with axial flow, in particular a coolant shut-off valve of claim 2, **characterized in that** the outflow surface (83) forms a convexly curved first central surface section (91) adjoined by a concavely curved surface section (88).

4. Fluid valve with axial flow, in particular a coolant shut-off valve of one of the preceding claims, **characterized in that** a valve seat surface (87) of the valve seat (58) is formed between the concavely curved surface section (88) of the incident flow surface (82) or the outflow surface (83) and the radially outer convex surface section (86) of the incident flow surface (82) or on the concave surface section (88) of the incident flow surface (82) or the outflow surface (83).

5. Fluid valve with axial flow, in particular a coolant shut-off valve of claim 4, **characterized in that** the valve seat surface (57) of the valve seat (58) is arranged orthogonally to the direction of movement of the armature unit (49).

6. Fluid valve with axial flow, in particular a coolant shut-off valve of one of the preceding claims, **characterized in that** the ratio of the length of the flow-around region (81) to the width of the flow-around region (81) is less than 1.5.

7. Fluid valve with axial flow, in particular a coolant shut-off valve of claim 6, **characterized in that** the ratio of the length of the flow-around region (81) to the width of the flow-around region (81) is less than 1.

8. Fluid valve with axial flow, in particular a coolant shut-off valve of one of the preceding claims, **characterized in that** the diameter of the flow-around region (81) corresponds to 1.2 to 1.5 times the diameter of the closing surface (57) of the armature unit (49) on the valve seat (58).

9. Fluid valve with axial flow, in particular a coolant shut-off valve of one of the preceding claims, **characterized in that** the maximum axial length of the outflow surface (83) corresponds to 0.1 to 0.5 times the diameter of the closing surface (57) of the armature unit (49) on the valve seat (58).

10. Fluid valve with axial flow, in particular a coolant shut-off valve of one of the preceding claims, **characterized in that** the maximum axial length of the incident flow surface (82) corresponds to 0.1 to 1.1 times the diameter of the closing surface (57) of the armature unit (49) on the valve seat (58).

11. Fluid valve with axial flow, in particular a coolant shut-off valve of one of the preceding claims, **characterized in that** the circumferential ring (77) of the flow-around body (78) is axially tensioned towards the housing (12) via a shoulder (76) of the first connection piece (60).

12. Fluid valve with axial flow, in particular a coolant shut-off valve of one of the preceding claims, **characterized in that** the circumferential ring (77) of the flow-around body (78) is clamped between the housing (12) and the shoulder (76) of the first connection piece (60) with interposition of a support ring (80).

## Revendications

1. Soupape de fluide à écoulement axial, particulièrement une soupape d'arrêt de fluide, avec
un électroaimant (10) comprenant une bobine (14), un noyau (26) et une unité d'armature (49) pouvant être traversée, ainsi que des éléments de reflux (18, 20, 22) magnétique,
un carter (12), dans lequel l'électroaimant (10) est disposé,
un premier manchon de raccordement (60) fixé sur une première extrémité axiale du carter (12) et dans lequel un corps d'écoulement (78) est disposé qui comprend un siège de soupape (58),
un deuxième manchon de raccordement (70) fixé sur une extrémité axiale opposée du carter (12) et
une surface de fermeture (57) à une section d'extrémité (54, 56) axiale de l'unité d'armature (49), qui coopère avec le siège de soupape (58),
**caractérisée en ce que**
le corps d'écoulement (78) comprend une région d'écoulement (81) axisymétrique avec une surface d'arrivée d'écoulement (82) et une surface de sortie d'écoulement (83), qui, ensemble, comprennent au moins trois sections de surface (84, 85, 86, 88, 91) disposées l'une après l'autre dans la direction axiale, dont la courbure alterne entre concave et convexe d'une section de surface (84, 85, 86, 88, 91) à la section de surface (84, 85, 86, 88, 91) axialement adjacente, ledit corps d'écoulement (78) étant fabriqué d'un seul tenant en élastomère ou comme une partie fabriquée par injection en bi-composantet comportant un anneau circonférentiel (77) relié avec la région d'écoulement (81) du corps d'écoulement (78) par des entretoises (89).

2. Soupape de fluide à écoulement axial, particulièrement une soupape d'arrêt de fluide selon la revendication 1, **caractérisée en ce que** la surface d'arrivée d'écoulement (82) est formée par une première section de surface (84) centrale à courbure convexe à laquelle se raccorde une section de surface (85) concave à laquelle se raccorde une section de surface (86) convexe radialement extérieure qui présent la distance de la région d'écoulement (81) la plus grande de l'axe central.

3. Soupape de fluide à écoulement axial, particulièrement une soupape d'arrêt de fluide selon la revendication 2, **caractérisée en ce que** la surface de sortie d'écoulement (83) forme une première section de surface (91) centrale à courbure convexe à laquelle se raccorde une section de surface (88) à courbure concave.

4. Soupape de fluide à écoulement axial, particulièrement une soupape d'arrêt de fluide selon l'une quelconque des revendications précédentes, **caractérisée en ce qu'**une surface de siège de soupape (87) du siège de soupape (58) est formée entre la section de surface (88) à courbure concave de la surface d'arrivée d'écoulement (82) ou de la surface de sortie d'écoulement (83) et la section de surface (86) convexe radialement extérieure de la surface d'arrivée d'écoulement (82) ou dans la section de surface (88) à courbure concave de la surface d'arrivée d'écoulement (82) ou de la surface de sortie d'écoulement (83).

5. Soupape de fluide à écoulement axial, particulièrement une soupape d'arrêt de fluide selon la revendication 4, **caractérisée en ce que** la surface de siège de soupape (87) du siège de soupape (58) est disposée perpendiculairement à la direction de mouvement de l'unité d'armature (49).

6. Soupape de fluide à écoulement axial, particulièrement une soupape d'arrêt de fluide selon l'une quelconque des revendications précédentes, **caractérisée en ce que** le rapport de la longueur de la région d'écoulement (81) à la largeur de la région d'écoulement (81) est inférieur à 1,5.

7. Soupape de fluide à écoulement axial, particulièrement une soupape d'arrêt de fluide selon la revendication 6, **caractérisée en ce que** le rapport de la longueur de la région d'écoulement (81) à la largeur de la région d'écoulement (81) est inférieur à 1.

8. Soupape de fluide à écoulement axial, particulièrement une soupape d'arrêt de fluide selon l'une quelconque des revendications précédentes, **caractérisée en ce que** le diamètre de la région d'écoulement (81) correspond à 1,2 à 1,5 fois le diamètre de la surface de fermeture (57) de l'unité d'armature (49) sur le siège de soupape (58).

9. Soupape de fluide à écoulement axial, particulièrement une soupape d'arrêt de fluide selon l'une quelconque des revendications précédentes, **caractérisée en ce que** la longueur de la surface de sortie d'écoulement (83) correspond à 0,1 à 0,5 fois le diamètre de la surface de fermeture (57) de l'unité d'armature (49) sur le siège de soupape (58).

10. Soupape de fluide à écoulement axial, particulièrement une soupape d'arrêt de fluide selon l'une quelconque des revendications précédentes, **caractérisée en ce que** la longueur axiale maximale de surface d'arrivée d'écoulement (82) correspond à 0,1 à 1,1 fois le diamètre de la surface de fermeture (57) de l'unité d'armature (49) sur le siège de soupape (58).

11. Soupape de fluide à écoulement axial, particulièrement une soupape d'arrêt de fluide selon l'une quelconque des revendications précédentes, **caractérisée en ce que** l'anneau circonférentiel (77) du corps d'écoulement (78) est sollicité vers le carter (12) par un épaulement (76) dudit premier manchon de raccordement (60).

12. Soupape de fluide à écoulement axial, particulièrement une soupape d'arrêt de fluide selon l'une quelconque des revendications précédentes, **caractérisée en ce que** l'anneau circonférentiel (77) du corps d'écoulement (78) est coincé entre le carter (12) et ledit épaulement (76) dudit premier manchon de raccordement (60) avec interposition d'un anneau de support (80).
